# EUROPEAN PATENT APPLICATION

(11) **EP 3 182 505 A1**
(43) Date of publication of application: **21.06.2017**
(21) Application number: 15199944.8
(22) Date of filing: 14.12.2015
(51) Int. Cl.: H01Q 1/02, H01Q 15/24, H01Q 1/42, G01S 7/02

(54) **RADAR ANTENNA AND RADAR SYSTEM**

(71) Applicant: Terma A/S, 8520 Lystrup (DK)
(72) Inventor: PEDERSEN, Morten Østergaard, 8520 Lystrup (DK); WÆDEGAARD, Kristian Juncher, 8520 Lystrup (DK)
(74) Representative: Zacco Denmark A/S

(57) **Abstract**

A radar antenna, comprises a radar source configured to transmit a radar signal having a first polarisation in a transmission direction, a transformer having at least three layers spaced apart along the transmission direction, each of the at least three layers comprising an electrically conductive structure such to transform the radar signal into a radar signal having a second polarisation, such as from a linear polarized radar signal into a circular or vertical polarized radar signal and a substantially radar signal transparent climate shell arranged on the transformer. An outermost layer of the at least three layers adjacent to the climate shell is configured for electrically heating the climate shell.

## Description

### TECHNICAL FIELD

The present disclosure relates to a radar antenna and a radar system comprising such antenna.

### BACKGROUND

Radar antennas are mounted either as stationary antennas or as mobile antennas. For airport, particularly civilian airports, radar antennas are used as surface movement radars (SMR) to monitor movement on the airfield including taxiways and runways. In this regard, SMR may detect and monitor movement of planes or vehicles during low visibility or night time. Probably SMR could detect also other moving objects like birds swarms in cases where ASR or specific bird radar is not available or suitable. To capture the surrounding of the airport, stationary radar systems comprise an immobile mount point, onto which a rotatable radar antenna is mounted. Depending on the application, such radar antennas rotate with a frequency of up to a few Hz, resulting in a relatively large velocity of its outer edges in the range of a few tens of meters per second.

During winter periods and harsh weather conditions, ice may form on the outer surface of the antenna due to the undercooled precipitation striking the antenna surface. In addition to the fact that the ice on the surface of the radar antenna and more particular the radome or climate shell protecting the underlying radar source affects its transparency, ice part may detach from the surface and be flung with high speeds due to the angular velocity of the radar antenna.

As radar antennas at airports are often mounted on control towers or similar buildings, people passing in close vicinity can be struck by those ice pieces causing injuries. Ice pieces may also damage other objects like cars parked close by.

Hence, there is a need for reducing the formation of ice on radar antennas in harsh weather conditions.

### SUMMARY

The present disclosure proposes a radar antenna and a radar system addressing one or more aspect as stated above. In an aspect of the present disclosure, a radar antenna comprises a radar source configured to transmit a polarized radar signal in a transmission direction. A transformer is arranged on front of the radar source and comprises at least three layers spaced apart along the transmission direction, each of the at least three layers comprising an electrically conductive structure such to transform the polarized radar signal from one state of polarization to another state of polarization, such as for example transform the radar signal having a first polarization to a radar signal having a second polarization, such as for example to transform a linear polarized radar signal from one state of polarization to another state of polarization. In an aspect of particular interest, but not limited thereto are the at least three layers configured to transform from a horizontal state of polarization to a circular state of polarization, or from a vertical state of polarization to a circular state of polarization. In another aspect the transformation may comprise a rotation. A substantially radar signal transparent climate shell (radome) is arranged in front of the transformer, such that the transformer is between the shell and the radar source. A layer of the at least three layers and particularly the outermost layer adjacent to the climate shell is configured to electrically heat the climate shell.

The present disclosure proposes a radar antenna for transmitting a substantially circular polarized radar signal. A transformation from a linear polarized radar signal into another state, particular into a circular polarized radar signal is achieved by using a transformer and particular a "passive" transformer to the extent that the transformer does not comprise elements supplied by an electric current for the purpose of transforming the radar signal. As the climate shell adjacent to the transformer is subject to harsh weather conditions, ice may be formed on the climate shell. Hence, a layer of the transformer (or the electrically conductive structure) is heated by an electrical current, particularly a DC current, such that the generated heat is transferred to the climate shell. The current through the electrically conductive structure does not affect the transformation behaviour of the layer itself.

The invention therefore proposes a device with the functionality of transforming the polarization of a radar signal particular into a circular polarized radar signal with the functionality of heating the climate shell arranged on top of such device. The transforming functionality is passive, meaning no active elements, like transistors, diodes and the like or electrical current is required, while heating is done actively by supplying a DC current to an electrically conductive structure of a layer adjacent to the climate shell and configured to transfer heat onto the shell.

The radar source may be configured to provide a directed beam of linear polarized radar signal towards the transformer. In an alternative aspect, the radar source may comprise a radar generator and a polarisation filter. The radar generator is configured to generate a directed radar signal but without a specific polarization, such as without a specific linear polarisation. The polarisation filter is arranged in front of the radar generator in the direction of the radar beam and polarizes the radar signal by reflection to provide a polarized radar signal, such as a linear polarized radar signal. In this regard it is noted that the polarisation filter can be adjacent or close to the radar generator or adjacent and close to the transformer. In some aspects the polarisation filter is attached or even implemented on the transformer. Generally, a wave front of the linear polarized radar signal may substantially be parallel to a portion of the transformer.

In some aspects, the transformer can have a plurality of layers. The structure of layers and the transformer can be configured to delay a portion of an incident linear polarized radar signal by a phase angle. In one aspect, part of the incident linear signal will be delayed by 180 degrees, resulting in the transformation of horizontal linear to vertical linear polarization or vice versa. In another case, one part of the incident linear signal will be delayed by 90 degrees resulting in the transformation from linear polarization to circular polarization.

A distance between two adjacent layers is selected based on the radar signal frequency to be transformed. For example, the distance between two adjacent layers may be in the range between 1/8 and ½ of a wavelength of the linearized polarized radar signal. In a particular example, the distance may be substantially a quarter of a wavelength of the linearized polarized radar signal. A space between two adjacent layers may be filled with a radar signal transparent material, particular foam like material. The material can comprise a small heat transport or a small heat capacity. The material in between layer of the transformer increases its stability and may also act as an environment protection causing a relatively stable environment inside the radar antenna.

In another aspect the transformer, the electrically conductive structure of each layer has a grating structure with a periodicity of less than a wavelength of the incident linear polarized radar signal. In an example it may comprise substantially half of a wavelength of the linear polarized radar signal. The electrically conductive structure comprises a plurality of parallel arranged stripes inclined with respect to a polarization direction of the linear polarized radar signal. The inclination may cause a first component of an electric field vector of the radar signal to be parallel to the plurality of stripes and a second component of the electrical field vector to be perpendicular to the plurality of stripes. The stripes and element of the structure of each layer are connected together to have the same potential. Two of the three layers may also be grounded. In some aspects the grating structure and/or the stripes may comprise a distance smaller than half of the wavelength of the radar signal. The layers or more generally the transformer may therefore be configured to cause a reflection of a portion of a radar signal having a specific polarisation direction. Hence, in an incident radar signal having at least two portions of linear polarisation directions (with respect to a reference direction) the transformer may reflect the portion having a first polarization, while transforming the portion with the second polarisation direction into a circular polarised signal.

Another aspect deals with the material and the dimensions of the layers in the transformer. Each of the at least three layers may comprise a printed circuit board having a thickness smaller than a quarter of a wavelength of the radar signal. In some aspects, the printed circuit board can have a thickness of about a 0.1 millimetre with the electrically conductive structure etched upon. A thickness of the climate shell is smaller than a quarter of a wavelength of the radar signal, and may be in the range of 0.1 mm to 3 mm.

The radar antenna can have different shape for its transmission surface. In some aspects the radar antenna may comprise a flat surface. Alternatively the climate shell and/or the transformer or at least a layer thereof may comprise a curved surface with at least a first curvature. In some aspects, it may comprise a doubled curved surface having a first and a second curvature, the latter perpendicular to the first curvature. The curvature may be selected such to achieve a suitable aerodynamic behaviour of the climate shell and/or the transformer.

The heating current to the layer of the transformer as well as the supply current to the radar source must be provided to the antenna. Hence in some aspects of the disclosure, the radar antenna further comprises a connector to rotatably connect the radar antenna to a mount point, the connector configured to provide an electrical connection between the mount point and the transformer to supply the outermost layer with the heating current. Said connector can be implemented by various devices, for instance a ring connector, a rotatable collector ring, a slip-ring, an inductive connection and the like.

Another aspect is related to a radar system making use of such radar antenna. A radar system comprises a radar antenna as disclosed above, one or more temperature sensors operatively coupled to the climate shell and/or the outermost layer configured to provide a signal based on the measured temperature, and a control circuit to control a heating current through the electrically conductive structure of the outermost layer in response to the signal. In a further aspect the sensor may be included in the heating structure itself and in a particular aspect may be part of the heating structure. For example, the heating current through the heating element may be measured in comparison to a reference current. As the heating current may be dependent on a resistance of the electrical conductive structure, which is temperature dependence, actual heating current through the electrical conductive structure provides information about its temperature.

The control circuit control the heating of the climate shell based on the temperature. For this purpose, the control circuit can be configured to compare a signal associated with the temperature of the climate shell with a signal associated with the temperature of the outermost layer or any layer of the transformer. Alternatively the control circuit can be configured to compare a signal associated with one of temperature of the climate shell and the temperature of the outermost layer with a reference signal. Yet another possibility is to compare a signal associated with one of the temperature of the climate shell and the outermost layer with a signal associated with an ambient temperature. A combination of the different aspect is also possible. Based on the comparison the control circuit determines the heating current to achieve a desired temperature for the climate shell.

The radar system comprises a feedback loop to determine and adjust the temperature of the climate shell to a pre-determined level by applying a heating current to a conductive structure of a layer thermally coupled to the shell, wherein the conductive structure of a layer also forms a part of the transformer to change the state of polarization of the radar signal.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
Figure 1 discloses a first embodiment illustrating several aspects of the present disclosure;
Figure 2 discloses a second embodiment illustrating several aspects of the present disclosure;
Figure 3 discloses an embodiment of a radar system utilizing a radar antenna and illustrating several aspects of the present disclosure;
Figure 4 discloses an embodiment of a layer of an embodiment showing aspect of the present disclosure
Figure 5 illustrates an equivalent circuit of a transformer of a radar antenna.

### DETAILED DESCRIPTION

Aspects of the present disclosure will be described more fully hereinafter with reference to the accompanying drawings. The apparatus and method disclosed herein can, however, be realized in many different forms and should not be construed as being limited to the aspects set forth herein. Features in the embodiments can be combined in different ways without deviating from the spirit of the present disclosure. Like numbers in the drawings refer to like elements throughout.

The terminology used herein is for the purpose of describing particular aspects of the disclosure only, and is not intended to limit the invention. As used herein, the singular forms "a", "an" and "the" are intended to include the plural forms as well, unless the context clearly indicates otherwise. In the following the expression "unpolarised", "linear polarized" and "circular polarized" will be used. The terms are not meant to be absolute terms rather they characterize the majority confinement of the electric field vector or magnetic field vector to a given plane along the direction of propagation. For example a circular polarized signal can still have a small portion, which is linear polarized, while the majority of energy transmitted is associated with a linear polarized signal.

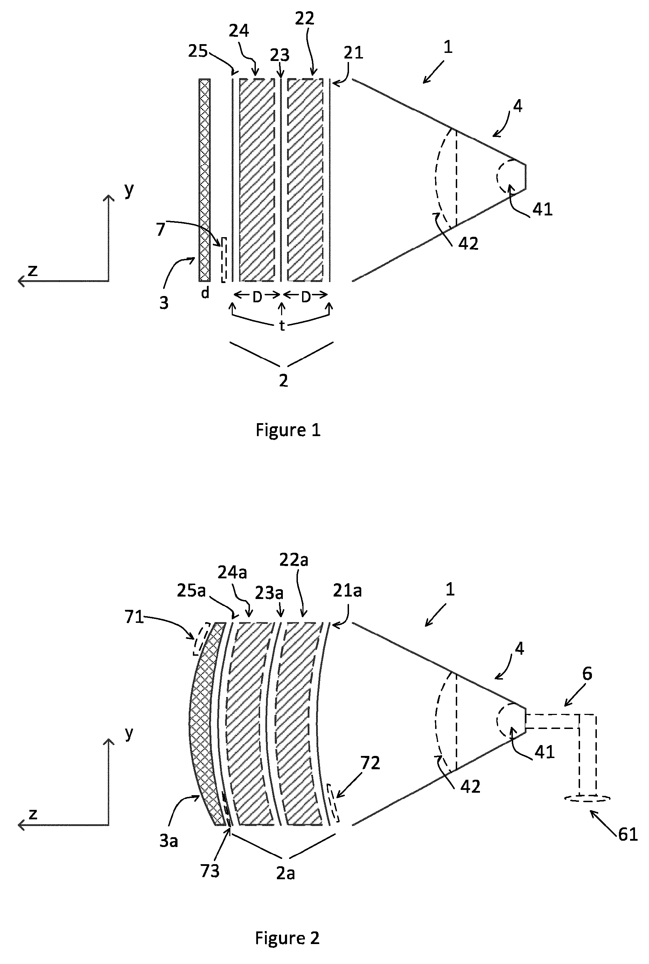

Figure 1 illustrates a cut view of an exemplary embodiment of a radar antenna according to some aspects. The radar antenna 1 comprises a radar source 4 configured to emit a beam formed radar signal substantially in z-direction. The radar signal itself is generated in a radar generated 41 as an unpolarised signal for example in the IEEE X-band. The radar source 4 also comprises a polarisation filter 42 arranged in front of the radar generator and more particular between the radar generator 41 and the transformer 2 discussed further below in great detail. The polariser is adapted to transform the radar signal from its unpolarised form to a linear polarised signal suitable for the transformer later on. In an alternative solution, the radar generator already transmits a linear polarised signal and therefore, the polariser in front of the generator can be omitted.

The radar antenna further comprises a transformer 2 arranged along the beam direction of the radar signal and a climate shell 3 arranged on the transformer. The climate shell 3 covers the transformer and/or other part of the radar antenna (not shown) and protects them from environmental hazards, like wind, rain, snow or ice. Climate shell 3 comprises glass fiber, ABS or similar material with high dielectric constant but a small thickness. To this extent the climate shell may comprise a frequency selective surface, being transparent within the IEEE X-band or the radar signal's frequency band, but otherwise having a higher reflexion or absorption factor. The thickness of the climate shell is in the range of a below one mm, for example 0.6 mm or for example in a range between 0.1 and 3 mm.

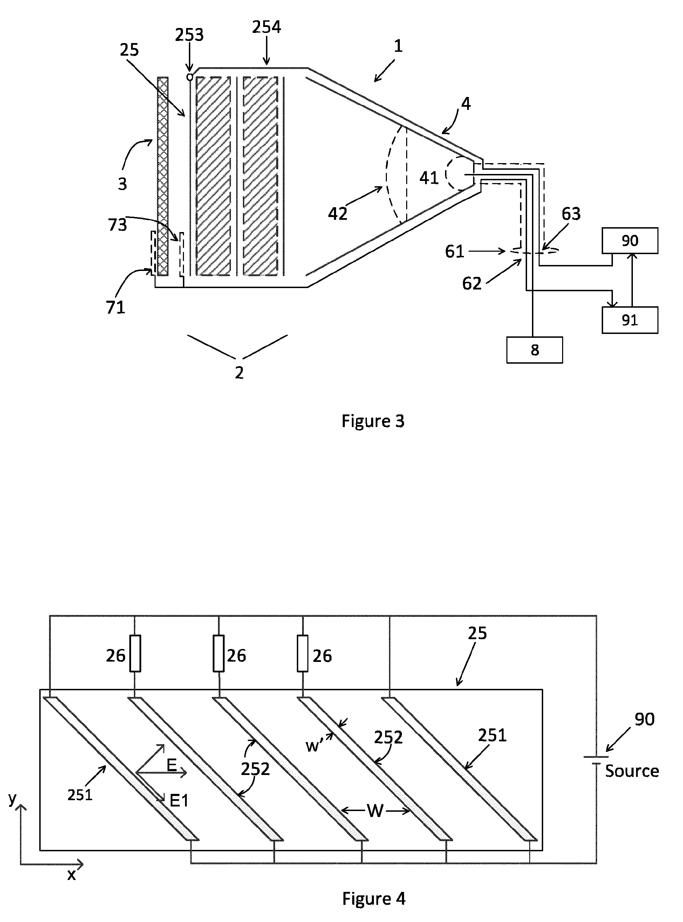

The transformer comprises a layer structure (as explained further below with respects to Figure 4 of three or more layers with an electrical conductive structure imprinted or otherwise deposited on each layer. In the example three layers 21, 23, and 25 of this type are shown. Two adjacent layers are separated by a respective insulation layer 22 and 24, while the outermost layer 25 is directly arranged on the climate shell. The transformer can comprise more layers and may also be partly enclosed by insulation material for further mechanical or environmental protection. For example, the space of the radar antenna between the inner most layer 21 and the polarisation filter 42 can be filled with radar transparent foam like material. The thickness D of the separation layers 22 and 24 in this embodiment is chosen to be approximately a quarter of the wavelength of the radar signal, while the thickness of the layers 21, 23 and 25 carrying the electrical conductive structure is much smaller and can be in the range of less than a mm, for example in a range between 50 µm to 200 µm.

The transformer including the electrical conductive structure is configured to transform the linear polarized signal from the radar source into a vertical or circularly polarized signal. Transformation in this regard can mean that the transformer shifts the phase of one portion by 90° or 180° with respect to the other portion. For this purpose, a grating structure or wire grid can be used, like the one in the exemplary embodiment of Figure 4. The top view onto the grating structure in Figure 4 illustrates the structure of outermost layer 25, but the electrical conductive structure of layers of 23 and 21 is similar. The electrical conductive structure is imprinted or etched onto a PCB made of epoxy or similar radar transparent material. It comprises a periodic grating in the form of a plurality of stripes 251 and 252. While only five stripes are illustrated here, the layer can have a plurality of such stripes as well as other conductive structures imprinted on it. Each stripe 251 and 252 is inclined with respect to the linear polarization direction of the incident E-vector E in x-direction of the radar signal. The inclination is approximately 45°. The incident e-vector can therefore be considered to a component parallel to the inclined stripe and a component of approximately equal size perpendicular to the inclined stripes. The distance W between the striped is selected to be approximately half of the wavelength of the incident signal and shall generally be less than the wave length. In case it is less than half of the wavelength, the layer can also reflect a radar signal having a different polarisation, for instance a vertical polarisation in y- direction. The transformer can therefore also act as a reflector only transforming part of the incident radar signal, while reflecting other polarization directions. The thickness w' of each stripe is generally much smaller than the wavelength and for example in the range of 1 to 2 mm for a wavelength of approx. 33 mm. Material, thickness and length of those structures are selected such that stray capacitances or inductivities affecting the transformation and causing a loss of signal are reduced.

While the electrical structure in the illustrated layer shows some symmetry, the distances between the grating stripes as well as the inclination or the thickness can vary. This may depend on the shape and the wave fronts of the incident radar signal. For example the electrical structure and the above mentioned parameters can vary on the edges compared to the centre of the layer. Also the different layers can have a slightly different structure of characteristics to match the shape and polarization of the incident signal. The electrical structures on some layer can be grounded (not shown in Figure 4) or set to a specific potential.

In accordance with the present disclosure and referring back to figure 1, the outermost layer adjacent to the climate shell is configured to be heated by using an electrical DC current through its electrical structure. Generally, the electrical structure on a layer of the transformer is used for converting the radar signal into a polarized radar signal and also used for heating the climate shell. While the heating in this case is achieved by providing an electrical current through the structure of layer 25 adjacent to climate shell 3, it does not need to be restricted to such layer. In this case it is proposed, as layer 25 it adjacent to the climate shell while a heat insulating separation layer is arranged between layer 25 and layer 23. Generally, the outermost layer is heated, the term "outermost" layer corresponding to the layer, which comprises a reasonable good heat transfer to the climate shell, such that the climate shell can be heated by a current through the structure of said layer. The radar antenna optionally comprises one or more temperature sensors 7, of which one is arranged between the heating layer 25 and the climate shell 3 to capture the heat transfer. Alternatively or additionally may the temperature be obtained by an indirect temperature measurement, such as a measurement of a temperature-sensitive resistance of the wire elements.

Figure 4 illustrates an exemplary embodiment of a layer with an electrical structure configured for the above mentioned dual use. Layer 25 together with the other layers is configured to transform the radar signal into a circularly or vertically polarised signal and to heat the climate shell. The electrical structure is formed as a wire grid with a plurality of stripes 251 and 252. Each of the inclined striped 251 and 252 represents a heating wire or resistance and is connected in parallel to a DC current or voltage source 90. The resistance (for example given by a material parameter, thickness w' and length of the stripes) causes a voltage drop across the wire resulting in heat. They are chosen such that the grid can withstand the high current densities used for heating. The overall heating power may be in the range of a few hundred watts or kW. Accordingly, the current through the wire grid can be in the range of a few Ampere and hence the wire grid must have certain strength. Due to additional resistors 26 arranged to the three innermost stripes, the current through the stripes can be somehow adjusted. The resistors can be adjustable to fit the needs. Other devices than resistors can be used adjusting the current through one or more of these stripes. Adjusting the current through the stripes allows distributing the heat across the layer in a specific manner. As a result, the climate shell may be non-uniformly heated. In the illustrated example, the current through the most outer stripes is higher than in the inner layer, resulting that the edges of layer 25 are heated stronger than the inner part. Consequently, more heat is transported to the edges of the climate shell. Such non-uniform heating is suitable in application in which the radar antenna is rotating, wherein one edge of the climate shell is facing the wind and hence requires additional heating.

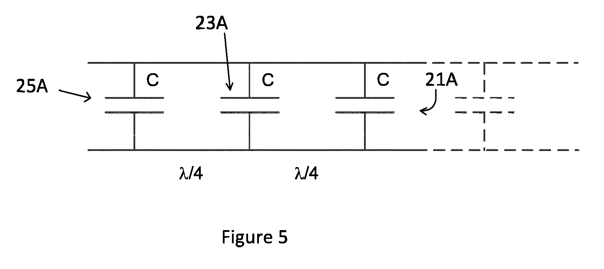

In a more general way, Figure 5 illustrates the equivalent circuit of the quarter wave plate structure for the parallel field component E1 of the e-field vector according to aspect of the present disclosure. The equivalent circuit comprises a parallel circuit of capacitances. Each capacitance corresponds to a layer with its grating or wire grid structure. The wire grid is adjusted to provide a fixed and in this case equal capacitance C. The capacitances are separated by a quarter wavelength of the signal of interest. As illustrated, the transformer and the quarter wave plate are not restricted to three layers, but can contain several more layers arranged in parallel in the same way.

The embodiment of Figure 1 comprises a substantially planar surface. A second exemplary embodiment is shown in Figure 2. Climate shell 3a in this example as well as the transformer 2a comprises a curved structure. The transformer 2a and or climate shell 3a can be single curved and/or double curved. In the latter configuration, it comprises a first curvature, for example in y-direction as illustrated and a second curvature in x- direction. The curvature of the climate shell can be different than the curvature form the transformer as illustrated in the figure. For example, the transformer can still comprise a planar surface and only the climate shell has the curvature on its outer surface. Alternatively both elements can have the same curvature. Having a curvature on the outer surface, particularly a non-symmetrical one can provide some aerodynamic benefits, when the antenna is rotating and reduce the aerodynamics resistance. For example, the outer surface for the climate shell can comprise a shape similar to a wing to reduce the aerodynamic resistance. Consequently, the shell may then be also heated non-uniformly to compensate a cooling gradient, when the antenna is rotating.

The radar antenna in Figure 2 comprises several temperature sensors. A first temperature sensor 71 is located on the outside of the climate shell and configured to read the ambient temperature of the shell. It may be arranged such that it reads the temperature of the shell including the cooling effects caused by the rotation of the antenna. Another sensor (not shown) may be arranged at a non-rotating or moving part of the antenna to measure ambient temperature, wind speed or air pressure. A second sensor 73 is arranged between the layer heating the shell 3a and the climate shell itself. This sensor can also be part of the electrical conductive structure itself. In such case the heating current and/or the deviation from a nominal value is measured by the sensor and a signal is derived therefrom. In a further embodiment the sensor is the electrical conductive structure itself. As such structure shows a temperature dependant resistance the heating current change indicating the temperature can be measured directly at or close to the power supply. A further sensor 72 is arranged within the radar antenna to measure the temperature within the antenna structure to avoid overheating the inner parts thereby damaging the antenna.

In this example, the radar antenna is rotating and comprises a connector 6 with a rotatable mount point 61. The rotatable mount point includes all connectors for supplying the heating current, but also the supply for radar source 4 and the connection of control and measurement signals of sensors 71 to 73. The measurement signal can be digital or analogue. Electrical connection can be achieved by a ring connection or when appropriate by inductive connection where appropriate.

The temperature sensors and its signal are part of a feedback and control system as illustrated in Figure 3. The radar system in Figure 3 comprises a radar antenna 1 having a radar source 4, a transformer 2 and a climate shell 3 attached to the transformer. Radar source 4 provides a linear polarised radar signal, for example in the IEEE X-band between 8 GHz and 12 GHz. The transmitted radar signal is transformed into a circular polarised signal by transformer 2. For this purpose transformer comprises a sandwich of a plurality of layers with an electrical conductive structure forming a quarter wave plates. The layers with the electrical structures are separated by electrical insulation layers, which are otherwise transparent to the radar signal. The outermost layer with the wire grid imprinted or etched upon is configured to be heated by a heating current. Size and characteristics of the electrical structure is adjusted that is can carry sufficient heating current and is also suited for the transformation of the radar signal. The outer layer is coupled via a connector 253 to a current supply line 254, which extends till mount point 61. A connector 62 couples the supply line to a power supply unit 90. Said unit can be a high voltage supply providing a large voltage with a high current to the heating structure of the outermost layer. A further supply from power supply 8 provides the necessary power via connector 62 and mount point 61 to radar source 4 to generate the radar signal. Connector 62 can be implemented as a collector ring for example or a slip ring.

The radar system in this exemplary embodiment also comprises two temperature sensors 71 and 73. Sensor 71 is configured to measure the ambient temperature on the outer surface of climate shell 3 and is locate on a par of said surface. A further sensor 73 is arranged between the layer of the transformer configured to heat climate shell 3 and the climate shell 3. Both temperature sensors are coupled via signal lines and mount point 61 to a control unit 91. The control unit (in this example located outside the radar antenna) receives both temperature signals. Depending on the temperature difference the control unit 91 provides a feedback signal to the power unit 90 to adjust the heating current. This feedback loop ensures that the climate shell is sufficiently heated, while mitigating the risk of overheating. While in this example, two temperature signals are compared, the feedback loop can contain several more or other parameters. For example the ambient temperature can be taken into account when adjusting the feedback signal. Further the sensor signals can be compared to general reference signals and a decision upon the amount of heating can be based upon thereon.

In the drawings and specification, there have been disclosed exemplary embodiments. However, many variations and modifications can be made to these embodiments. Accordingly, although specific terms are employed, they are used in a generic and descriptive sense only and not for purposes of limitation, the scope of the embodiments being defined by the following claims.

## Claims

1. A radar antenna, comprising
- a radar source configured to transmit a radar signal having a first polarization in a transmission direction;
- a transformer having at least three layers spaced apart along the transmission direction, each of the at least three layers comprising an electrically conductive structure such to transform the radar signal into a radar signal having a second polarization;
- a substantially radar signal transparent climate shell arranged on the transformer; and
- wherein the electrically conductive structure of an outermost layer of the at least three layers adjacent to the climate shell is configured for electrically heating the climate shell.

2. The radar antenna according to claim 1, wherein a distance between two adjacent layers of the at least three layers is substantially in the range of 1/8^{th} to 1/2 of a wavelength of the radar signal, particularly about a quarter of the wavelength and/or wherein a space between two adjacent layers of the at least three layers is filled with a radar signal transparent material having small heat transport characteristics, particularly a foam like material.

3. The radar antenna according to claim 1 or 2, wherein the transformer is configured to introduce a phase shift into a portion of the radar signal, wherein said phase shift is one of substantially 90° and substantially 180°, respectively, and/or wherein the transformer is configured to transform a linear polarised radar signal into a circular polarised radar signal or is configured to transform a horizontal polarisation to a vertical polarisation or vice versa.

4. The radar antenna according to any of the preceding claims, wherein the electrically conductive structure of each layer has a grating structure with a periodicity of less than a wavelength of the radar signal and particular about half of the wavelength.

5. The radar antenna of claim 4, wherein the electrically conductive structure of the at least three layers are configured to reflect a portion of the radar signal having a polarization perpendicular to the polarization of the radar signal, such as of a linear polarized radar signal.

6. The radar antenna according to any of the preceding claims, wherein the radar signal is linear polarized and wherein the electrically conductive structure comprises a plurality of parallel arranged stripes inclined with respect to a polarization direction of the linear polarized radar signal and/or wherein a first component of an electric field vector of the radar signal is parallel to a plurality of stripes of the electrically conductive structure and a second component of the electrical field vector is perpendicular to the plurality of stripes.

7. The radar antenna according to claim 5 or 6, wherein the stripes are electrically connected to each other.

8. The radar antenna according to any of the preceding claims, wherein each of the at least three layers comprises a printed circuit board having a thickness smaller than a quarter of a wavelength of the radar signal and/or wherein the electrical conductive structure of two of the at least three layers are grounded.

9. The radar antenna according to any of the preceding claims, wherein the radar source comprises
- a radar generator configured to provide a beam-formed radar signal in transmission direction; and
- a polarisation filter arranged in front of the radar generator to transform the beam-formed radar signal into a linear polarized radar signal.

10. The radar antenna according to any of the preceding claims, wherein the climate shell is arranged directly on top of the outermost layer and/or a thickness of the climate shell is smaller than a quarter of a wavelength of the radar signal, particularly in the range of 0.3 mm to 3 mm and particularly about 0.8 mm.

11. The radar antenna according to any of the preceding claims, wherein the transformer and/or the climate shell comprises a curved surface with at least a first curvature, and/or wherein a wave front of the radar signal is substantially parallel to a portion of the transformer and/or the climate shell.

12. The radar antenna according to any of the preceding claims further comprising
- a connector to rotatable connect the radar antenna to a mount point, the connector configured to provide an electrical connection between the mount point and the transformer to supply the outermost layer with the heating current.

13. The radar antenna according to claim 12, wherein the connector comprises one of a ring connector, a collector ring, a slip ring or an inductive connection.

14. A radar system, comprising:
- a radar antenna according to one of the preceding claims;
- a temperature sensor operatively coupled to the climate shell and/or the outermost layer configured to provide a signal based on the measured temperature;
- a control circuit to control a heating current through the electrically conductive structure of the outermost layer in response to the signal.

15. A radar system according to claim 15, wherein the control circuit is configured to compare one of:
- the signal associated with the temperature of the climate shell with the signal associated with the temperature of the outermost layer;
- the signal associated with one of temperature of the climate shell and the temperature of the outermost layer with a reference signal;
- the signal associated with one of temperature of the climate shell and the temperature of the outermost layer with a signal associated with an ambient temperature;
- the heating current with a reference value or a change of the heating current with a reference value;
- the signal associated with a resistance of the electrically conductive structure;
and adjust the heating current in response to said comparison.

16. A radar system according to any of claims 14 or 15, further comprising a DC power supply coupled to the control circuit.
